# EUROPEAN PATENT APPLICATION

(11) **EP 2 670 154 A2**
(43) Date of publication of application: **04.12.2013**
(21) Application number: 12738981.5
(22) Date of filing: 30.01.2012
(51) Int. Cl.: H04N 21/4227, G09G 5/08, G06F 3/03

(54) **IMAGE DISPLAY DEVICE AND METHOD FOR OPERATING SAME**

(30) Priority: 30.01.2011 US 201161437659 P
(71) Applicant: LG Electronics Inc., Yeongdeungpo-gu Seoul 150-721 (KR)
(72) Inventor: CHO, Sang Hyun, Seoul 137-724 (KR); AHN, Woo Seok, Seoul 137-724 (KR); KWON, Youk, Seoul 137-724 (KR); LEE, Jang Hee, Seoul 137-724 (KR); LIM, Young Wan, Seoul 137-724 (KR)
(74) Representative: Frenkel, Matthias Alexander
(86) International application number: PCT/KR2012/000688
(87) International publication number: WO 2012/102592

(57) **Abstract**

The present invention relates to an image display device and a method for operating same. According to an embodiment of the present invention, a method for operating an image display device uses a remote controller, and comprises the steps of: displaying a pointer in a first area of a display; receiving movement coordinate information of the pointer from the remote controller; restoring the first area using a prestored image when the first area does not overlap a second area where a pointer is displayed, based on the movement coordinate information; storing an image of the second area; and displaying a pointer in the second area. This enables the pointer of the remote controller to be easily displayed.

## Description

### [Technical Field]

The present invention relates to an image display device and a method for operating the same, and more particularly to an image display device which is capable of easily displaying a pointer of a pointing device, and a method for operating the same.

### [Background Art]

An image display device functions to display images to a user. A user can view a broadcast program using an image display device. The image display device can display a broadcast program selected by the user on a display from among broadcast programs transmitted from broadcast stations. The recent trend in broadcasting is a worldwide transition from analog broadcasting to digital broadcasting.

Digital broadcasting transmits digital audio and video signals. Digital broadcasting offers many advantages over analog broadcasting, such as robustness against noise, less data loss, ease of error correction, and the ability to provide clear, high-definition images. Digital broadcasting also allows interactive viewer services, compared to analog broadcasting.

In order to operate an image display device, a remote control device, that is, a remote controller, separated from the image display device is being used. With change in operation performed by the image display device, the remote control device additionally requires various functions. Accordingly, various methods for increasing user convenience in an image display device using a remote control device have been researched.

### [Disclosure]

### [Technical Problem]

An object of the present invention devised to solve the problem lies in an image display device capable of easily displaying a pointer of a pointing device and a method for operating the same.

Another object of the present invention devised to solve the problem lies in an image display device capable of easily performing pairing when utilizing a plurality of pointing devices, and a method for operating the same.

Another object of the present invention devised to solve the problem lies in an image display device capable of increasing user convenience when utilizing different types of remote controllers, and a method for operating the same.

### [Technical Solution]

The object of the present invention can be achieved by providing a method for operating an image display device using a pointing device, including displaying a pointer in a first area of a display, receiving pointer movement coordinate information from the pointing device, restoring the first area using a pre-stored image if a second area in which the pointer will be displayed does not overlap the first area based on the movement coordinate information, storing an image of the second area, and displaying the pointer in the second area.

In another aspect of the present invention, provided herein is a method for operating an image display device, including performing data communication with a first remote controller after pairing with the first remote controller has ended, receiving a pairing signal from a second remote controller, temporarily stopping data communication with the first remote controller, and displaying an object indicating that pairing with the second remote controller is being performed.

In another aspect of the present invention, provided herein is a method for operating an image display device, including receiving coordinate information from a first remote controller, displaying a pointer on a display based on the coordinate information, receiving a signal from a second remote controller, and deleting the pointer or moving focusing corresponding to the pointer or pointer location to a control area of the second remote controller if the pointer is located outside the control area of the second remote controller.

In another aspect of the present invention, provided herein is an image display device using a pointing device, including a display configured to display a pointer in a first area, an interface configured to receive a pointer movement coordinate information from the pointing device, a controller configured to restore the first area using a pre-stored image if a second area in which the pointer will be displayed does not overlap the first area based on the movement coordinate information and to control the display to display the pointer in the second area, and a memory configured to store an image of the second area before the pointer is displayed.

In another aspect of the present invention, provided herein is an image display device including an interface configured to perform data communication with a first remote controller after pairing with the first remote controller has ended, a controller configured to temporarily stop data communication with the first remote controller if a pairing signal is received from a second remote controller, a display configured to display an object indicating that pairing with the second remote controller is being performed.

In another aspect of the present invention, provided herein is an image display device including an interface configured to receive coordinate information from a first remote controller, a display configured to display a pointer based on the coordinate information, and a controller configured to delete the pointer or to move focusing corresponding to the pointer or pointer location to a control area of a second remote controller if a signal is received from the second remote controller in a state in which the pointer is located outside a control area of the second remote controller.

### [Advantageous Effects]

According to one embodiment of the present invention, by restoring a first area, in which a pointer is displayed, using a pre-stored image, storing an image of a second area in which the pointer will be displayed, and displaying the pointer in the second area, it is possible to easily display the pointer of a pointing device.

In particular, if the first area and the second area overlap, restoration and pointer display are performed in a third area including the first area and the second area and the third area is displayed. Therefore, it is possible to easily display the pointer of the pointing device.

According to one embodiment of the present invention, if data communication with a first pointing device is performed, pairing with a second pointing device is performed and then data communication with the second pointing device is performed, data communication with the first pointing device is temporarily stopped. Therefore, it is possible to easily perform pairing when a plurality of pointing devices is used.

According to one embodiment of the present invention, if different types of remote controllers are used, and, more particularly, if the pointer is located outside a control area of the second remote controller in a state in which the pointer is displayed based on coordinate information from the first remote controller, the pointer is deleted such that the user uses the second remote controller. Accordingly, it is possible to increase user convenience.

### [Description of Drawings]

FIG. 1 is a block diagram showing the internal configuration of an image display device according to an embodiment of the present invention;

FIGS. 2a and 2b are perspective views of an image display device and a pointing device according to an embodiment of the present invention;

FIG. 3 is a block diagram showing the internal configuration of an interface of an image display device and a pointing device according to an embodiment of the present invention;

FIG. 4 is a block diagram showing the internal configuration of a controller of FIG. 1;

FIG. 5 is a flowchart illustrating a method for operating an image display device according to an embodiment of the present invention;

FIG. 6 is a flowchart illustrating a method for operating an image display device according to an embodiment of the present invention;

FIGS. 7 to 10 are views referred to for describing the operating method of FIG. 5 or 6;

FIG. 11 is a flowchart illustrating a method for operating an image display device according to an embodiment of the present invention;

FIGS. 12 to 13 are views referred to for describing the operating method of FIG. 11;

FIG. 14 is a flowchart illustrating a method for operating an image display device according to an embodiment of the present invention; and

FIGS. 15a to 17c are views referred to for describing the operating method of FIG. 14.

### [Best Mode]

Exemplary embodiments of the present invention will be described with reference to the attached drawings.

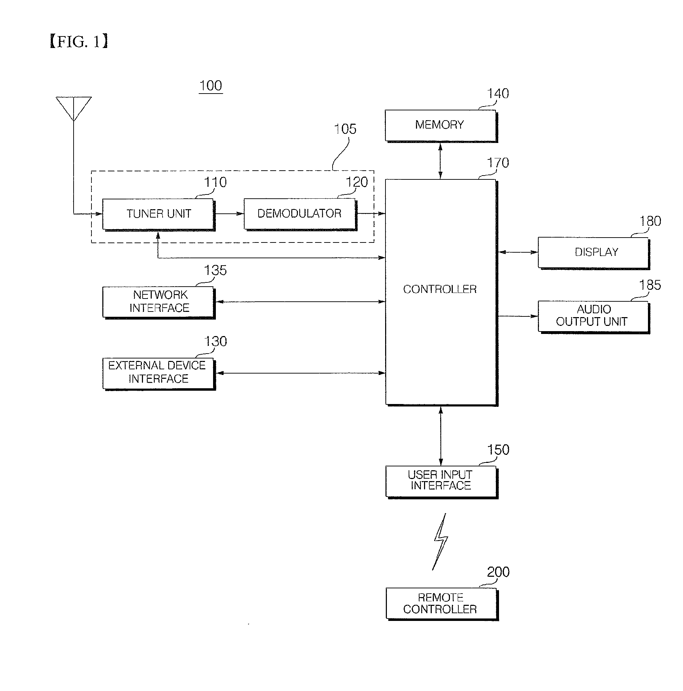

FIG. 1 is a block diagram showing the internal configuration of an image display device according to an embodiment of the present invention.

Referring to FIG. 1, the image display device 100 according to the embodiment of the present invention includes a broadcast reception unit 105, an external device interface 130, a memory 140, a user input interface 150, a sensor unit (not shown), a controller 170, a display 180 and an audio output unit 185.

The broadcast reception unit 105 may include a tuner unit 110, a demodulator 120 and a network interface 130. As needed, the broadcasting reception unit 105 may be configured so as to include only the tuner unit 110 and the demodulator 120 or only the network interface 130.

The tuner unit 110 tunes to a Radio Frequency (RF) broadcast signal corresponding to a channel selected by a user from among RF broadcast signals received through an antenna 50 or RF broadcast signals corresponding to all channels previously stored in the image display device. The tuned RF broadcast is converted into an Intermediate Frequency (IF) signal or a baseband Audio/Video (AV) signal.

For example, the tuned RF broadcast signal is converted into a digital IF signal DIF if it is a digital broadcast signal and is converted into an analog baseband AV signal (Composite Video Banking Sync/Sound Intermediate Frequency (CVBS/SIF)) if it is an analog broadcast signal. That is, the tuner unit 110 may be capable of processing not only digital broadcast signals but also analog broadcast signals. The analog baseband A/V signal CVBS/SIF may be directly input to the controller 170.

The tuner unit 110 may be capable of receiving RF broadcast signals from an Advanced Television Systems Committee (ATSC) single-carrier system or from a Digital Video Broadcasting (DVB) multi-carrier system.

The tuner unit 110 may sequentially select a number of RF broadcast signals corresponding to all broadcast channels previously stored in the image display device by a channel storage function from among a plurality of RF signals received through the antenna and may convert the selected RF broadcast signals into IF signals or baseband A/V signals.

The tuner unit 110 may include a plurality of tuners for receiving broadcast signals corresponding to a plurality of channels or include a single tuner for simultaneously receiving broadcast signals corresponding to the plurality of channels.

The demodulator 120 receives the digital IF signal DIF from the tuner unit 110 and demodulates the digital IF signal DIF.

The demodulator 120 may perform demodulation and channel decoding, thereby obtaining a stream signal TS. The stream signal may be a signal in which a video signal, an audio signal and a data signal are multiplexed.

The stream signal output from the demodulator 120 may be input to the controller 170 and thus subjected to demultiplexing and A/V signal processing. The processed video and audio signals are output to the display 180 and the audio output unit 185, respectively.

The external device interface 130 may transmit or receive data to or from a connected external device. The external device interface 130 may include an A/V input/output (I/O) unit (not shown) or a radio transceiver (not shown).

The external device interface 130 may be connected to an external device such as a Digital Versatile Disc (DVD) player, a Blu-ray player, a game console, a camera, a camcorder, or a computer (e.g., a laptop computer), wirelessly or by wire so as to perform an input/output operation with respect to the external device.

The A/V I/O unit may receive video and audio signals from an external device. The radio transceiver may perform short-range wireless communication with another electronic apparatus.

The network interface 135 serves as an interface between the image display device 100 and a wired/wireless network such as the Internet. For example, the network interface 135 may receive content or data provided by an Internet or content provider or a network operator over a network.

The memory 140 may store various programs necessary for the controller 170 to process and control signals, and may also store processed video, audio and data signals.

In addition, the memory 140 may temporarily store a video, audio and/or data signal received from the external device interface 130. The memory 140 may store information about a predetermined broadcast channel by the channel storage function of a channel map.

While the memory 140 is shown in FIG. 1 as being configured separately from the controller 170, to which the present invention is not limited, the memory 140 may be incorporated into the controller 170.

The user input interface 150 transmits a signal input by the user to the controller 170 or transmits a signal received from the controller 170 to the user.

For example, the user input interface 150 may transmit/receive various user input signals such as a power-on/off signal, a channel selection signal, and a screen setting signal from a remote controller 200, may provide the controller 170 with user input signals received from local keys (not shown), such as inputs of a power key, a channel key, and a volume key, and setting values, provide the controller 170 with a user input signal received from a sensor unit (not shown) for sensing a user gesture, or transmit a signal received from the controller 170 to a sensor unit (not shown).

The controller 170 may demultiplex the stream signal received from the tuner unit 110, the demodulator 120, or the external device interface 130 into a number of signals, process the demultiplexed signals into audio and video data, and output the audio and video data.

The video signal processed by the controller 170 may be displayed as an image on the display 180. The video signal processed by the controller 170 may also be transmitted to an external output device through the external device interface 130.

The audio signal processed by the controller 170 may be output to the audio output unit 185. In addition, the audio signal processed by the controller 170 may be transmitted to the external output device through the external device interface 130.

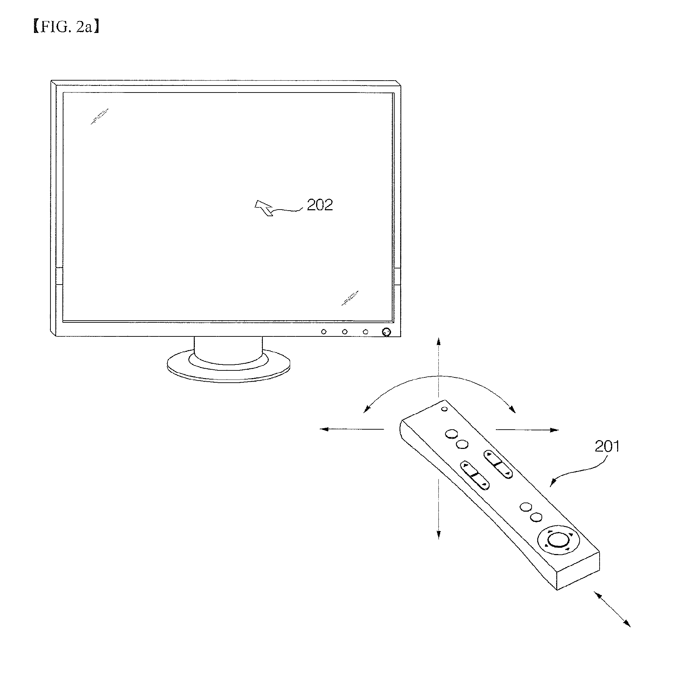

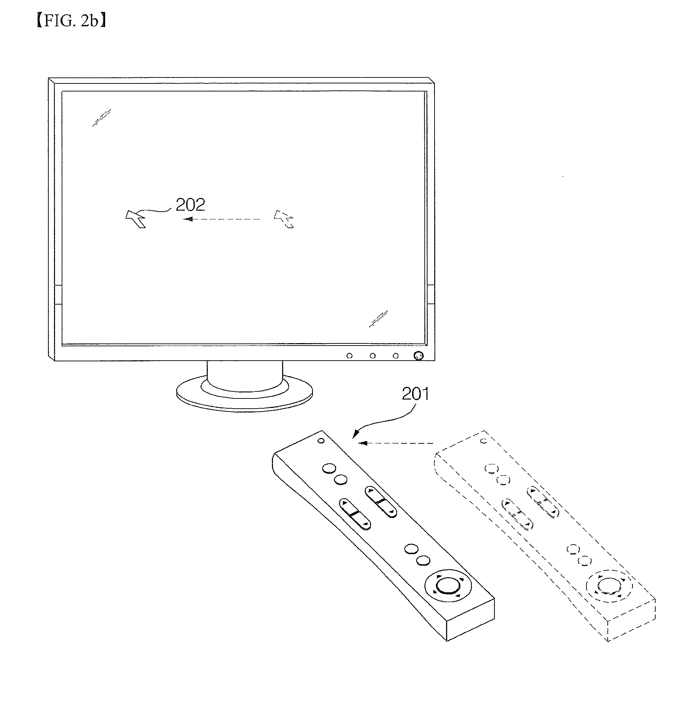

While not shown in FIG. 1, the controller 170 may include a DEMUX, a video processor, etc., which will be described in detail later with reference to FIG. 2.

The controller 170 may control the overall operation of the image display device 100. For example, the controller 170 controls the tuner unit 110 to tune to an RF signal corresponding to a channel selected by the user or a previously stored channel.

The controller 170 may control the image display device 100 according to a user command input through the user input interface 150 or an internal program.

The controller 170 may control the display 180 to display images. The image displayed on the display 180 may be a Two-Dimensional (2D) or Three-Dimensional (3D) still or moving image.

The controller 170 may generate and display a predetermined object of an image displayed on the display 180 as a 3D object. For example, the object may be at least one of a screen of an accessed web site (newspaper, magazine, etc.), an electronic program guide (EPG), various menus, a widget, an icon, a still image, a moving image, text, etc.

Such a 3D object may be processed to have a depth different from that of an image displayed on the display 180. Preferably, the 3D object may be processed so as to appear to protrude from the image displayed on the display 180.

The controller 170 may recognize the position of the user based on an image captured by the camera unit (not shown). For example, a distance (z-axis coordinate) between the user and the image display device 100 may be detected. An x-axis coordinate and a y-axis coordinate in the display 180 corresponding to the position of the user may be detected.

Although not shown, a channel browsing processor for generating a thumbnail image corresponding to a channel signal or an external input signal may be further included. The channel browsing processor may receive the stream signal TS output from the demodulator 120 or the stream signal output from the external device interface 130, extract an image from the received stream signal, and generate a thumbnail image. The generated thumbnail image may be decoded into a stream form to be input to the controller 170 together with the decoded image. The controller 170 may display a thumbnail list including a plurality of thumbnail images on the display 180 using the input thumbnail image.

The thumbnail list may be displayed in a brief viewing method of displaying the thumbnail list in a part of an area in a state of displaying a predetermined image or may be displayed in a full viewing method of displaying the thumbnail list in a full area. The thumbnail images in the thumbnail list may be sequentially updated.

The display 180 converts the video signal, the data signal, the OSD signal and the control signal processed by the controller 170 or the video signal, the data signal and the control signal received by the external device interface 130 and generates a drive signal.

The display 180 may be a Plasma Display Panel (PDP), a Liquid Crystal Display (LCD), an Organic Light-Emitting Diode (OLED) display or a flexible display.

In particular, the display 180 may be a 3D display. For viewing a 3D image, the display 180 may be divided into a supplementary display method and a single display method.

In the single display method, a 3D image is implemented on the display 180 without a separate subsidiary device, for example, glasses. The single display method may include, for example, a lenticular method, a parallax barrier, or the like.

In the supplementary display method, a 3D image is implemented on the display 180 using a viewing device. The supplementary display method includes various methods such as a Head-Mounted Display (HMD) method or a glasses method.

The glasses method may be divided into a passive method such as a polarized glasses method and an active method such as a shutter glasses method. The HMD method may be divided into a passive method and an active method.

If the display 180 is a touchscreen, the display 180 may function as not only an output device but also as an input device.

The audio output unit 185 receives the audio signal processed by the controller 170 and outputs the received audio signal as sound.

The camera unit (not shown) captures images of a user. The camera unit (not shown) may be implemented by one camera, but the present invention is not limited thereto. That is, the camera unit may be implemented by a plurality of cameras. The camera unit (not shown) may be embedded in the image display device 100 at the upper side of the display 180 or may be separately provided. Image information captured by the camera unit (not shown) may be input to the controller 170.

The controller 170 may sense a user gesture from an image captured by the camera unit (not shown), a signal sensed by the sensor unit (not shown), or a combination of the captured image and the sensed signal.

The remote controller 200 transmits user input to the user input interface 150. For transmission of user input, the remote controller 200 may use various communication techniques such as IR communication, RF communication, Bluetooth, Ultra Wideband (UWB) and ZigBee. In addition, the remote controller 200 may receive a video signal, an audio signal or a data signal from the user input interface 150 and output the received signals visually or audibly.

The block diagram of the image display device 100 illustrated in FIG. 1 is only exemplary. Depending upon the specifications of the image display device 100 in actual implementation, the components of the image display device 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope and spirit of the present invention.

Unlike FIG. 1, the image display device 100 may not include the tuner unit 110 and the demodulator 120 shown in FIG. 1 and may receive broadcast content via the network interface 130 or the external device interface 135 and play the broadcast content back.

The image display device 100 is an example of image signal processing device that processes an image stored in the device or an input image. Other examples of the image signal processing device include a set-top box without the display 180 and the audio output unit 185 shown in FIG. 1, a DVD player, a Blu-ray player, a game console, and a computer.

As shown in FIG. 2a, a pointer 202 corresponding to a pointing device 201 may be displayed on the image display device 100 as an example of a remote controller.

The user may move or rotate the pointing device 201 up and down, side to side, and back and forth. The pointer 202 displayed on the image display device 100 moves in correspondence with the movement of the pointing device 201.

FIG. 2b shows movement of the pointer displayed on the image display device 100 in correspondence with movement of the pointing device 201. In FIG. 2b, if the user moves the pointing device 201 to the left, the pointer displayed on the image display device 100 moves to the left. In the present embodiment, the pointing device 201 includes a sensor for detecting movement of the pointing device. Information about movement of the pointing device 201 detected by the sensor of the pointing device 201 is transmitted to the image display device 100.

The image display device 100 identifies movement of the pointing device 201 from the information about movement of the pointing device 201 and calculates the coordinates of the pointer 202.

FIGS. 2a and 2b show an example in which the pointer 202 displayed on the display 180 moves in correspondence with up, down, left and right movement or rotation of the pointing device 201.

The speed and direction of the pointer 202 may correspond to the speed and direction of the pointing device 201.

In the present embodiment, the pointer displayed on the image display device 100 is set to move in correspondence with movement of the pointing device 201.

As another example, a predetermined command may be set to be input to the image display device 100 in correspondence with movement of the pointing device 201. That is, if the pointing device moves back and forth, the size of the image displayed on the image display device 200 may be increased or decreased. The scope of the present invention is not limited to the present embodiment.

Such a pointing device 201 may be referred to as a 3D pointing device because the pointer 205 moves as the pointing device 201 moves in 3D space.

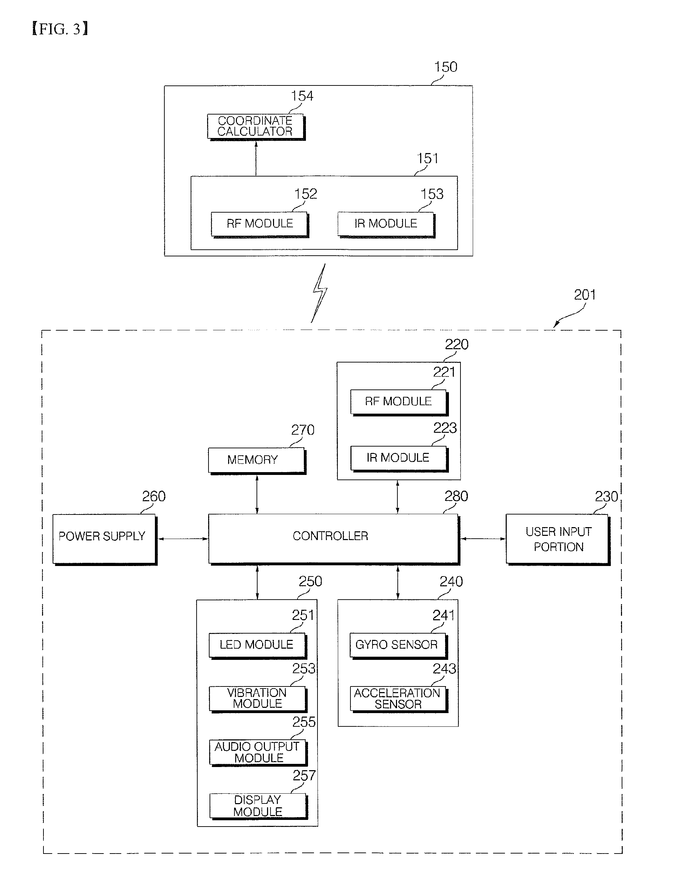

FIG. 3 is a block diagram of the pointing device 201 and the interface 150 of the image display device 100 according to an exemplary embodiment of the present invention.

Referring to FIG. 3, the pointing device 201 may include a radio transceiver 220, a user input portion 230, a sensor portion 240, an output portion 250, a power supply 260, a memory 270, and a controller 280.

The radio transceiver 220 transmits and receives signals to and from the image display device 100. In accordance with the exemplary embodiment of the present invention, the pointing device 201 may be provided with an RF module 221 for transmitting and receiving signals to and from the interface 150 of the image display device 100 according to an RF communication standard. In addition, the pointing device 201 may include an IR module 223 for transmitting and receiving signals to and from the interface 150 of the image display device 100 according to an IR communication standard.

In accordance with the exemplary embodiment of the present invention, the pointing device 201 transmits a signal carrying information about operation of the pointing device 201 to the image display device 100 through the RF module 221. In addition, the pointing device 201 may receive a signal from the image display device 100 through the RF module 221. The pointing device 201 may transmit commands associated with power on/off, channel switching, volume change, etc. to the image display device 100 through the IR module 223.

The user input portion 230 may include a keypad or buttons. The user may enter a command related to the image display device 100 to the pointing device 201 by manipulating the user input portion 230. If the user input portion 230 includes hard keys, the user may enter commands related to the image display device 100 to the pointing device 201 by pushing the hard keys. If the user input portion 230 is provided with a touchscreen, the user may enter commands related to the image display device 100 to the pointing device 201 by touching soft keys on the touchscreen. In addition, the user input portion 230 may have a variety of input means which may be manipulated by the user, such as a scroll key, a jog key, etc., to which the present invention is not limited.

The sensor portion 240 may include a gyro sensor 241 or an acceleration sensor 243. The gyro sensor 241 may sense information about operation of the pointing device 201. For example, the gyro sensor 241 may sense information about operation of the pointing device 201 along x, y and z axes. The acceleration sensor 243 may sense information about the velocity of the pointing device 201.

The output portion 250 may output a video or audio signal corresponding to manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 driven when the user input portion 230 has been manipulated or a signal is transmitted to or received from the image display device 100 through the radio transceiver 220, a vibration module 253 for generating vibrations, an audio output module 255 for outputting audio, or a display module 257 for outputting video.

The power supply 260 supplies power to the pointing device 201. When the pointing device 201 is kept stationary for a predetermined time, the power supply 260 blocks power from the pointing device 201, thereby preventing waste of power. When a predetermined key of the pointing device 201 is manipulated, the power supply 260 may resume power supply.

The memory 270 may store a plurality of types of programs required for control or operation of the pointing device 201, or application data. When the pointing device 201 transmits and receives signals to and from the image display device 100 wirelessly through the RF module 221, the pointing device 201 and the image display device 100 perform signal transmission and reception in a predetermined frequency band. The controller 280 of the pointing device 201 may store information about the frequency band in which to wirelessly transmit and receive signals to and from the image display device 100 paired with the pointing device 201 in the memory 270 and refer to the information.

The controller 280 provides overall control to the pointing device 201. The controller 280 may transmit a signal corresponding to predetermined key manipulation on the user input portion 230 or a signal corresponding to operation of the pointing device 201 sensed by the sensor portion 240 to the interface 150 of the image display device 100 through the radio transceiver 220.

The interface 150 of the image display device 100 may have a radio transceiver 151 for wirelessly transmitting and receiving signals to and from the pointing device 201, and a coordinate calculator 154 for calculating the coordinates of the pointer corresponding to operation of the pointing device 201.

The interface 150 may transmit and receive signals wirelessly to and from the pointing device 201 through the RF module 152. The interface 150 may also receive a signal from the pointing device 201 through the IR module 153 based on the IR communication standard.

The coordinate calculator 154 may calculate the coordinates (x, y, z) of the pointer 202 to be displayed on the display 180 by correcting trembling of the hand or errors from a signal corresponding to operation of the pointing device 201 received through the radio transceiver 151.

A signal received from the pointing device 201 through the interface 150 is provided to the controller 180 of the image display device 100. The controller 170 may identify information about operation of the pointing device 201 or key manipulation on the pointing device 201 from the signal received from the pointing device 201 and control the image display device 100 according to the information.

In another example, the pointing device 201 may calculate the coordinates of the pointer corresponding to the operation of the pointing device and output the coordinates to the interface 150 of the image display device 100. The interface 150 of the image display device 100 may then transmit information about the received coordinates to the controller 180 without correcting trembling of the hand or errors.

FIGS. 1 and 3 illustrate the image display device 100 and the pointing device 201 as the remote control device 200 according to an exemplary embodiment of the present invention. The components of the image display device 100 and the pointing device 201 may be integrated or omitted, or a new component may be added. That is, when needed, two or more components may be incorporated into a single component or one component may be divided into two or more separate components. In addition, the function of each block is presented for illustrative purposes, not limiting the scope of the present invention.

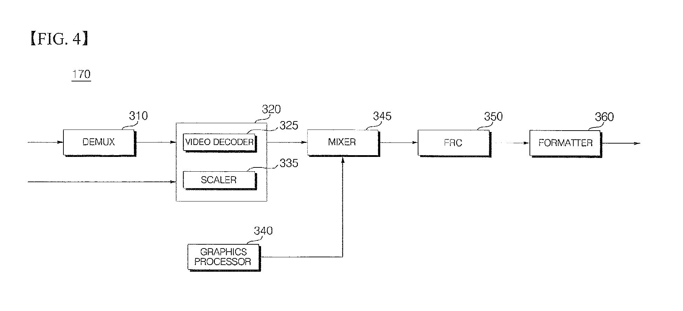

FIG. 4 is a block diagram showing the internal configuration of the controller of FIG. 1.

Referring to FIG. 4, the controller 170 according to the embodiment of the present invention may include a DEMUX 310, a video processor 320, a graphics processor 340, a mixer 345, a Frame Rate Converter (FRC) 350, and a formatter 360. The controller 170 may further include an audio processor (not shown), a data processor (not shown) and a processor (not shown).

The DEMUX 310 demultiplexes an input stream. For example, the DEMUX 310 may demultiplex an MPEG-2 TS into a video signal, an audio signal, and a data signal. The stream signal input to the DEMUX 310 may be received from the signal input portion such as the tuner unit 110.

The video processor 320 may process the demultiplexed video signal. For video signal processing, the video processor 320 may include a video decoder 325 and a scaler 335.

The video decoder 325 decodes the demultiplexed video signal and the scaler 335 scales the resolution of the decoded video signal so that the video signal can be displayed on the display 180.

The video decoder 325 may be provided with decoders that operate based on various standards. For example, the video decoder 325 may include at least one of an MPEG-2 decoder, an H.264 decoder, an MPEG-C decoder (MPEG-C part 3), an MVC decoder and an FTV decoder.

The processor (not shown) may control overall operation of the image display device 100 or the controller 170. For example, the processor (not shown) may control the tuner unit 110 to tune to an RF broadcast corresponding to an RF signal corresponding to a channel selected by the user or a previously stored channel.

The processor (not shown) may control the image display device 100 by a user command input through the user input interface 150 or an internal program.

The processor (not shown) may control data transmission of the network interface 135 or the external device interface 130.

The processor (not shown) may control the operation of the DEMUX 310, the video processor 320 and the graphics processor 340 of the controller 170.

The graphics processor 340 generates a graphics signal, that is, an OSD signal autonomously or according to user input. For example, the graphics processor 340 may generate signals by which a variety of information is displayed as graphics or text on the display 180, according to user input signals. The graphics processor 340 generates an OSD signal and thus may also be referred to as an OSD generator.

The OSD signal may include a variety of data such as a User Interface (UI), a variety of menus, widgets, icons, etc. In addition, the OSD signal may include a 2D object and/or a 3D object.

The mixer 345 may mix the decoded video signal processed by the video processor 320 with the OSD signal generated by the graphics processor 340. The mixed video signal is provided to the FRC 350.

The FRC 350 may change the frame rate of an input image. For example, the FRC may change a frame rate of 60 Hz to 120 Hz, 240 Hz or 480 Hz. If the frame rate of 60 Hz is changed to 120 Hz, the same first frame may be inserted between the first frame and a second frame or a third frame predicted from the first frame and the second frame may be inserted between the first frame and the second frame. If the frame rate of 60 Hz is changed to 240 Hz, the same three frames may be further included or three predicted frames may be inserted. If the frame rate of 60 Hz is changed to 480 Hz, the same seven frames may be further included or seven predicted frames may be inserted.

The FRC 350 may maintain the frame rate of the input image without frame rate conversion.

The formatter 360 may change the format of the input video signal such that the video signal is input to and displayed on the display 180. For example, the formatter may scale the video signal in correspondence with the resolution of the display 180. The formatter 360 may arrange a left-eye image and a right-eye image according to a predetermined format, for 3D display. For example, a left-eye image signal L and a right-eye image signal R may be arranged in a side-by-side format in which the left-eye image signal and the right-eye image signal are arranged in a horizontal direction, a top/down format in which the left-eye image signal and the right-eye image signal are arranged in a vertical direction or a frame sequential format in which the left-eye image signal and the right-eye image signal are time-divisionally arranged.

Although not shown, a 3D processor (not shown) for 3D signal processing may be further provided next to the formatter 360. The 3D processor (not shown) may control brightness, tint, and color of the video signal, to enhance the 3D effect. For example, signal processing such as making a close object clear and making a distant object blur may be performed. The function of the 3D processor may be incorporated into the formatter 360 or the video processor 320.

The audio processor (not shown) of the controller 170 may perform audio processing of the demultiplexed audio signal. For audio processing, the audio processor (not shown) may include various decoders.

For example, if the demultiplexed audio signal was coded, the signal processor may decode the audio signal. More specifically, if the demultiplexed audio signal is an MPEG-2 coded audio signal, an MPEG-2 decoder may decode the audio signal. If the demultiplexed audio signal was coded in compliance with MPEG 4 Bit Sliced Arithmetic Coding (BSAC) for terrestrial DMB, an MPEG 4 decoder may decode the audio signal. If the demultiplexed audio signal was coded in compliance with MPEG 2 Advanced Audio Codec (AAC) for satellite DMB or DVB-H, an AAC decoder may decode the audio signal. If the demultiplexed audio signal was coded in compliance with Dolby AC-3, an AC-3 decoder may decode the audio signal.

The signal processor (not shown) of the controller 170 may control bass, treble, and volume of the audio signal.

The data processor (not shown) of the controller 170 may process the demultiplexed data signal. For example, if the demultiplexed data signal was coded, the data processor may decode the data signal. The coded data signal may be electronic program guide (EPG) information including broadcast information such as a start time and end time of a broadcast program of each channel. For example, the EPG information may be ATSC-program and system information protocol (PSIP) information in the case of ATSC and may include DVB-service information (SI) information in the case of DVB. The ATSC-PSIP information or DVB-SI information may be included in the above-described stream, that is, the header (2 bytes) of the MPEG-2 TS.

The block diagram of the controller 170 shown in FIG. 3 is exemplary. The components of the block diagram may be integrated or omitted, or a new component may be added according to the specifications of the controller 170.

In particular, the FRC 350 and the formatter 360 may be included separately from the controller 170.

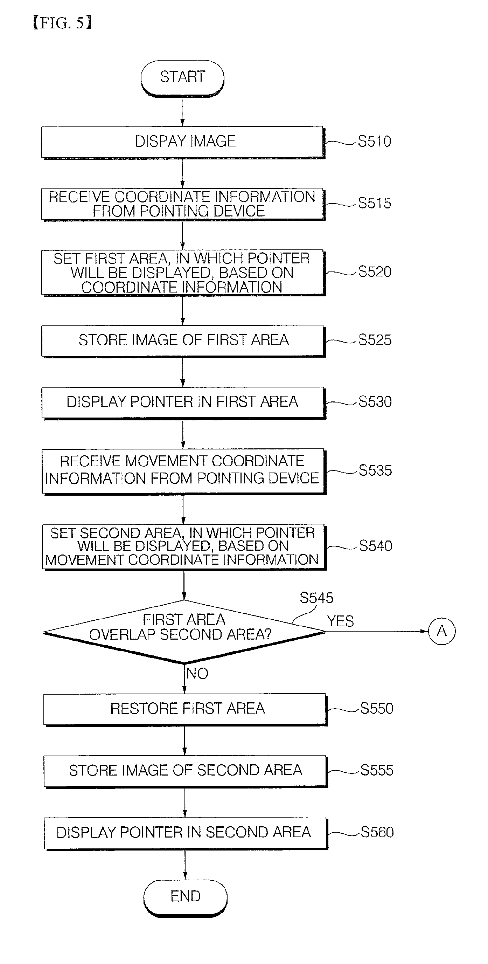

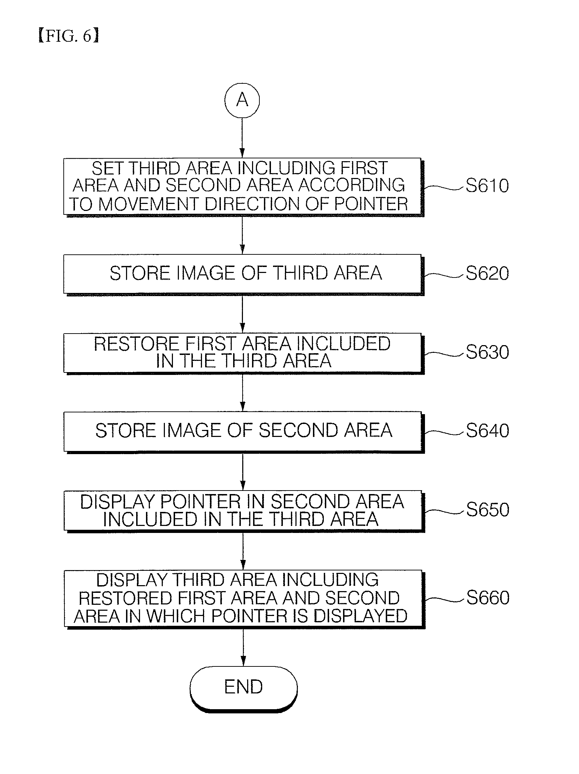

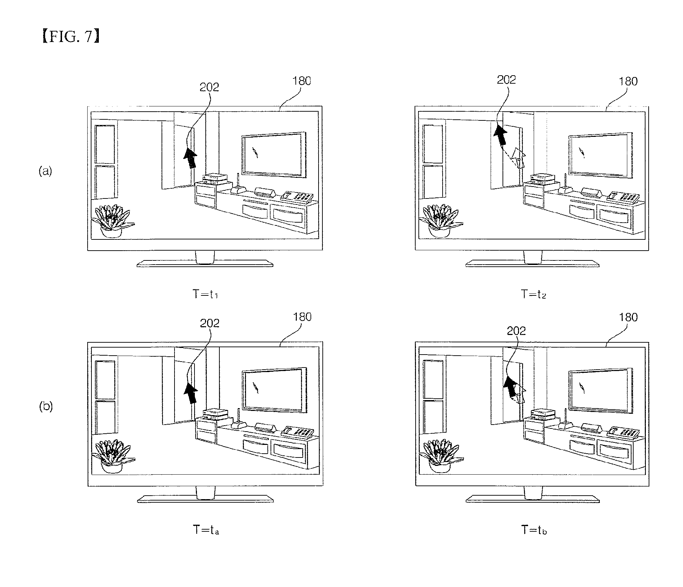

FIG. 5 is a flowchart illustrating a method for operating an image display device according to an embodiment of the present invention, FIG. 6 is a flowchart illustrating a method for operating an image display device according to an embodiment of the present invention, and FIGS. 7 to 10 are views referred to for describing the operating method of FIG. 5 or 6.

Referring to the figures, first, an image is displayed on the display (S510). The image displayed on the display 180 may be a broadcast image received through the signal input portion 110 or an external input image. The controller 170 controls display of the broadcast image or external input image. An image stored in the memory 140 or an image generated by the graphics processor 340 of the controller 140 may be displayed on the display 180.

The image displayed on the display 180 may be temporarily stored in a frame buffer (not shown). The frame buffer (not shown) may be included in the memory 140 or the controller 140. The image may be stored in the frame buffer (not shown) just before being displayed on the display 180 and after passing through the mixer 345 of FIG. 4. More specifically, the image stored in the frame buffer may be the image output from the formatter 360.

Next, pointer coordinate information is received from the pointing device (S515). If the user operates the pointing device, pointer coordinate information is received from the pointing device. At this time, assume that the pointing device and the image display device 100 have been paired.

The pointer coordinate information may be, for example, x coordinate information according to a horizontal-axis movement direction and y coordinate information according to a vertical-axis movement direction. Such coordinate information may be received by the interface 150 as described above. The coordinate calculator 541 may calculate the coordinates (x, y) of the pointer 202 to be displayed on the display 180 based on the received coordinate information.

Next, a first area in which the pointer will be displayed is set based on the coordinate information (S520). The controller 170 may set the first area, in which the pointer will be displayed, on the display 180 in correspondence with the calculated coordinates (x, y). For example, the first area in which the pointer will be displayed may be set by matching the calculated coordinates (x, y) with a display area according to the resolution of the display 180.

The first area may include the pointer displayed on the display 180.

Next, the image of the first area, in which the pointer will be displayed, of the displayed image is stored (S525). The controller 180 controls storage of the image of the first area, in which the pointer will be displayed, of the displayed image. The stored image of the first area does not include a pointer image. At this time, the image of the first area may be stored in the memory 140 or the memory (not shown) of the graphics processor 340. Hereinafter, assume that the image of the area is stored in the memory (not shown) of the graphics processor 340.

The image of the first area may be distinguished from a frame image stored in the frame buffer (not shown). The image of the first area may be stored separately from the frame image stored in the frame buffer (not shown).

Next, the pointer is displayed in the first area (S530). The controller 170 may controls display of the pointer in the first area. The graphics processor 340 generates a pointer having a predetermined shape and the display 180 displays the pointer generated by the graphics processor 340 in the first area. For example, the pointer may be overwritten or replaced in the first area of the image. Pointer display may be performed on the frame buffer (not shown). That is, the pointer may be displayed in a state in which a previous frame is stored in the frame buffer.

Next, movement coordinate information is received from the pointing device (S535). Similarly to step S510, if the user moves the pointing device, pointer movement coordinate information is received from the pointing device 201.

The pointer movement coordinate information may be, for example, x coordinate information according to a horizontal-axis movement direction or y coordinate information according to a vertical-axis movement direction. Such movement coordinate information may be received by the interface 150 as described above. The coordinate calculator 154 of the interface 150 may calculate the coordinates (x, y) of the pointer 202 which will be moved and displayed on the display 180 based on the received movement coordinate information.

Next, based on the coordinate information, a second area, in which the pointer will be displayed, is set (S540). The controller 170 may set the second area, in which the pointer will be displayed, on the display 180 in correspondence with the calculated coordinates (x, y). The second area may be set in units of a predetermined time. That is, the second area may be set in correspondence with movement of the pointing device when a predetermined time has elapsed after the pointer is displayed in the first area. The predetermined time may be a gap between frames. For example, if a vertical synchronization frequency is 60 Hz, the predetermined time may be 60^{th} of a second.

The second area may include the pointer displayed on the display 180.

Next, whether the first area and the second area overlap is determined (S545). The controller 170 may set the second area based on the movement coordinate information and compare the coordinate information of the first area with the coordinate information of the second area to determine whether the first area and the second area overlap.

If the movement distance of the pointing device 201 per unit time is large, the first area and the second area do not overlap and, if the movement distance of the pointing device 201 per unit time is small, the first area and the second area may overlap.

The controller 170 may determine whether the first area and the second area overlap in consideration of a difference between pointer coordinates of a current frame and pointer coordinates of a previous frame when the pointer is displayed on the frame buffer and the size of the pointer image. That is, a determination as to whether pixels overlap in the previous frame and the current frame may be made based on the size of the pointer image area.

FIG. 7(a) shows the case in which the first area and the second area do not overlap and FIG. 7(b) shows the case in which the first area and the second area overlap.

Referring to FIG. 7(a), the pointer 202 is displayed in the first area of the display 180 at a first time (T=t1) and is then displayed in the second area of the display 180 at a second time (T=t2).

Referring to FIG. 7(b), the pointer 202 is displayed in the first area of the display 180 at a third time (T=ta) and then is displayed in the second area overlapping the first area at a forth time (T=tb).

If the first area and the second area overlap, the pointer may flicker unless separate signal processing is performed. In the embodiment of the present invention, signal processing of the pointer display may differ between the case in which the areas overlap and the case in which the areas do not overlap.

For pointer display, generally, H/W rendering and S/W rendering may be used. H/W rendering is fast and has small computation amount but may not be used in a platform environment in which this function is not supported and may cause a problem in terms of extendibility if a specific function is used (e.g., cursor depth is expressed on a 3D TV). S/W rendering has good extendibility in a variety of UX and may propose various scenarios but is slow and has a problem that a residual image may be generated if a frame layer is not separately provided. However, in the embodiment of the present invention, a method of more efficiently displaying a cursor on a screen using the advantages of S/W rendering is proposed.

If the areas do not overlap, steps S550 to S560 will be performed and, if the areas overlap, steps S610 to S660 of FIG. 6 will be performed.

If the areas doe not overlap, the first area is restored (S550). The controller 170 controls restoration of the first area before the pointer is newly displayed using the stored image of the first area. For example, in the frame image of the frame buffer, the stored image of the first area may be overwritten or replaced and restored.

Next, the image of the second area is stored (S555). Since the first area and the second area doe not overlap, the image of the second area is stored after the first area is restored. At this time, the stored image of the second area does not include a pointer image.

The controller 180 may control storage of the image of the second area, in which the pointer will be displayed, of the displayed image. At this time, the image of the second area may be stored in the memory 140, the memory (not shown) of the graphics processor 340 or the frame buffer (not shown).

The image of the second area may be distinguished from the frame image stored in the frame buffer (not shown). The image of the second area may be stored separately from the frame image stored in the frame buffer (not shown).

Next, the pointer is displayed in the second area (S560). The pointer is controlled to be displayed in the first area by the controller 170.

The graphics processor 340 generates a pointer having a predetermined shape and the display 180 displays the pointer generated by the graphics processor 340 in the second area. For example, the pointer may be overwritten or replaced in the second area of the image. Pointer display may be performed on the frame buffer (not shown). That is, the pointer may be displayed in a state in which a previous frame is stored in the frame buffer.

The first area in which the pointer is displayed is restored using the pre-stored image, the image of the second area in which the pointer will be displayed is stored, and the pointer is displayed in the second area, thereby easily displaying the pointer of the pointing device. In particular, signal processing is separately performed with respect to only the first area and the second area so as to rapidly display the pointer. More specifically, if S/W rendering is used, operation can be softly or rapidly performed by directly drawing the pointer in an image frame buffer.

If the movement coordinate information is continuously received from the pointing device, steps S535 to S560 may be repeatedly performed.

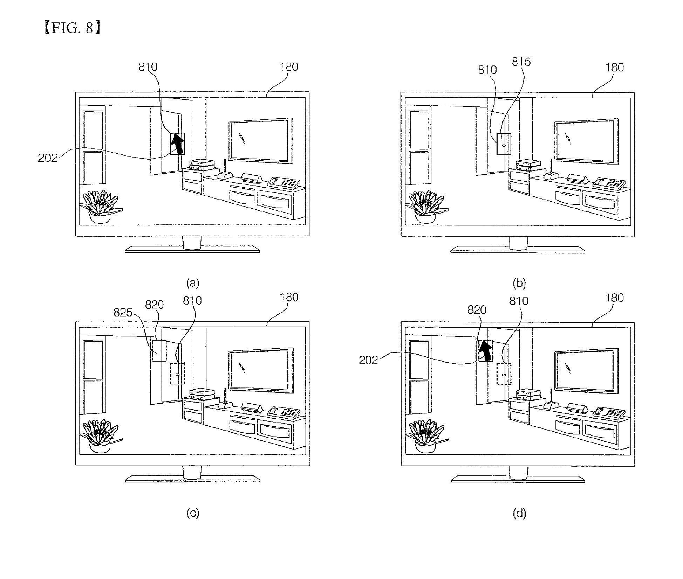

FIG. 8(a) shows the case in which the pointer 202 corresponding to movement of the pointing device is displayed in the first area 202 after the image of the first area 810 is stored in a state in which the image is displayed on the display 180. The pointer 202 may be overwritten or replaced and displayed in the first area of the image.

FIG. 8(b) shows the case in which the first area 810 is restored using the prestored image 815 of the first area. The first image 815 of the first area may be overwritten or replaced in the first area 810 of the image.

FIG. 8(c) shows the case in which the image 825 of the second area 820 in which the pointer will be newly displayed is separately stored in correspondence with movement of the pointing device. At this time, the first area 810 and the second area 820 do not overlap as shown. The image 815 of the first area and the image 825 of the second area may be stored in the same memory. For example, the image 815 of the first area and the image 825 of the second area may be stored at the same location of the memory 140 or the frame buffer (not shown).

FIG. 8(d) shows the case in which the pointer corresponding to movement of the pointing device is displayed in the first area 202 after the image of the first area 810 is stored. The pointer 202 may be overwritten or replaced and displayed in the second area 820 of the image.

If it is determined that the first area and the second area overlap in step S545, a third area including the first area and the second area is set according to the movement direction of the pointer (S610).

The controller 170 may set the third area including the first area and the second area based on the second area set in step S540. At this time, although the third area may include only the first area and the second area, hereinafter, it is assumed that the size of the third area is four times the size of the first area or the second area.

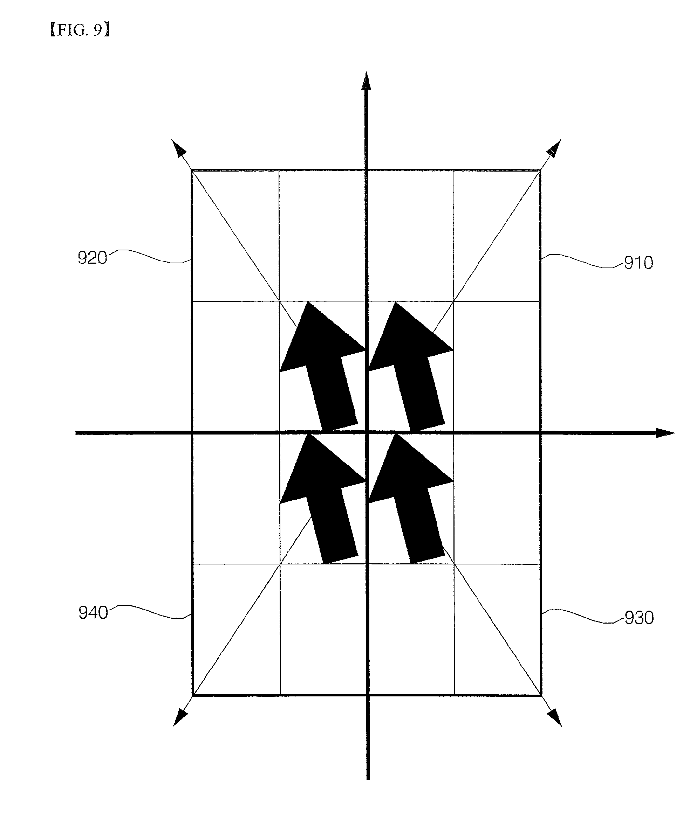

FIG. 9 shows an example of a method of setting the third area. For example, if the pointer moves in an upper right direction, the third area is set to an upper right area 910 of the pointer. The third area is set to an upper left area 920 if the pointer moves in an upper left direction, is set to a lower right area 930 if the pointer moves in a lower right direction and is set to a lower left area 940 if the pointer moves in a lower left direction.

A detailed algorithm thereof will now be described.

If the pointer coordinate movement distance is less than the size of the pointer image, a background image which includes the pointer area of the previous frame and the area, in which the pointer will be displayed, of the current frame and the size of which is twice the width of the pointer area or twice the height of the pointer area may be stored in the memory. At this time, the coordinates in the frame buffer of the stored area are set to the following four coordinates according to the direction of the pointer coordinate movement vector.

(Xn, Yn): Upper left coordinates of the pointer area of the previous frame

(Xn+1, Yn+1): Upper left coordinates of the pointer area of the current frame

Cwidth: Width of the pointer area

Cheight: Height of the pointer area

(XF, YF): Upper left coordinates of the background image area to be stored

Fwidth: Width of the background image area to be stored

Fheight: Height of the background image area to be stored

(1) in case of (Xn<Xn+1) and (Yn<Yn+1), XF=Xn and YF=Y+Cheight

(2) in case of (Xn>=Xn+1) and (Yn<Yn+1), XF=Xn-Cwidth and YF=Y+Cheight

(3) in case of (Xn<Xn+1) and (Yn>=Yn+1), XF=Xn and YF=Y-Cheight

(4) in case of (Xn>=Xn+1) and (Yn>=Yn+1), XF=Xn-Cwidth and YF=Y-Cheight

In case of (1) to (4), Fwidth=Cwidth*2 and Fheight:Cheight*2.

The third area may be set in units of a predetermined time. At this time, the predetermined time may be a gap between frames. For example, if a vertical synchronization frequency is 60 Hz, the predetermined time may be 60^{th} of a second.

Next, the image of the third area is stored (S620). The controller 180 may control storage of the image of the third area including the first area and the second area, in which the pointer will be displayed, of the displayed image. At this time, the stored image of the third area does not include the pointer image. The image of the third area may be stored in the memory 140, the memory (not shown) of the graphics processor 340 or the frame buffer (not shown).

The image of the third area may be distinguished from the frame image stored in the frame buffer (not shown). The image of the second area may be stored separately from the frame image stored in the frame buffer (not shown).

Since the size of the stored image of the third area is greater than that of the image of the first area or the second area, the image of the third area may be stored separately from the image of the first area or the image of the second area. As shown in FIG. 9, if the size of the image of the third area is four times that of the image of the first area or the image of the second area, a buffer having a size greater than that of the buffer for storing the image of the second area may be necessary.

Next, the first area included in the third area is restored (S630). The controller 170 controls restoration of the first area before the pointer is newly displayed using the stored image of the first area. For example, the stored image of the first area may be overwritten on or replaced with the frame image of the frame buffer.

Next, the image of the second area is stored (S640). The controller 180 controls storage of the image of the second area, in which the pointer will be displayed, of the displayed image. The image of the second area may be stored in the memory 140, the memory (not shown) of the graphics processor 340 or the frame buffer (not shown).

Since the first area overlaps the second area, the second area included in the third area stored in step S620 may partially include the pointer. Therefore, separately from step S620, after the first area is restored, the image of the second area may be stored.

Next, the pointer is displayed in the second area included in the third area (S650). The controller 170 controls display of the pointer in the first area.

The graphics processor 340 generates a pointer having a predetermined shape and the display 180 displays the pointer generated by the graphics processor 340 in the second area included in the third area. For example, the pointer may be overwritten or replaced and displayed in the second area included in the third area.

Next, the third area including the restored second area and the second area, in which the pointer is displayed, is displayed (S660). The controller 170 controls display of a third area image generated in the third area. Third area display may be performed on the frame buffer (not shown). That is, the third area may be displayed in a state in which a previous frame is stored in the frame buffer.

If the first area overlaps the second area, restoration and pointer display are performed in the third area including the first area and the second area and the third area is displayed, thereby easily displaying the pointer of the pointing device. In particular, only the third area is subjected to signal processing and is displayed, thereby rapidly displaying the pointer. More specifically, if S/W rendering is used, operation can be softly or rapidly performed by directly drawing the pointer in an image frame buffer.

According to another embodiment of the present invention, steps S630 and S640 of FIG. 6 may be replaced with restoration of the third area using the stored third area, unlike the figure.

That is, if the first area overlaps the second area, the third area including the first area and the second area may be restored using the third area image which is pre-stored in step S620 and does not include the pointer image. Therefore, the third area including the first area can be conveniently restored. Based on the restored third area, step S650 and subsequent steps thereof may be performed.

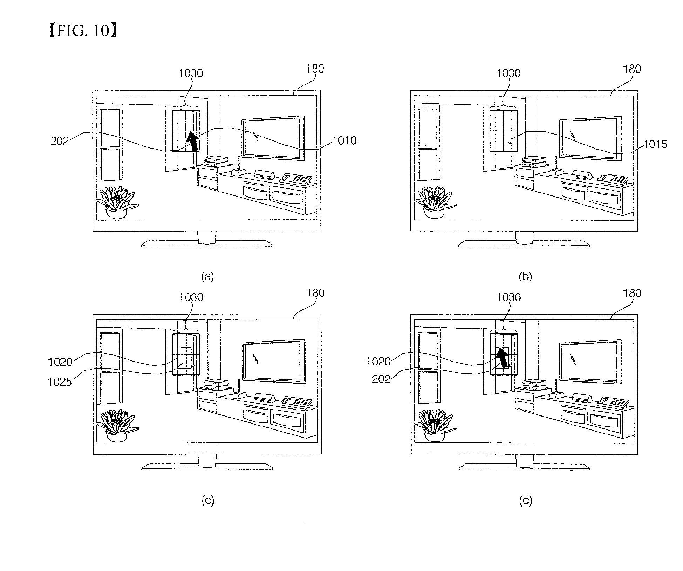

FIG. 10(a) shows the state in which the pointer 202 which moves in correspondence with movement of the pointing device is displayed in the first area 202 after the image of the first area 101 is stored in a state of displaying the image on the display 180. The pointer 202 may be overwritten or replaced in the first area 810 of the image.

If the pointer moves to the left and right and the second area overlaps the first area 1010, the third area 1030 including the first area 1010 is set to an upper left area.

FIG. 10(b) shows the state in which the first area 810 included in the third area 1030 is restored using the pre-stored image 1015 of the first area. The image 1015 of the first area may be overwritten or replaced in the first area 1010 included in the third area 1030.

FIG. 10(c) shows the state in which the image 1025 of the second area 1020 in which the pointer is newly displayed is separately stored in correspondence with movement of the pointing device. At this time, the first area 1010 and the second area 1020 overlap as shown. After restoring the first area, the second area in which the pointer is not displayed may be separately stored.

FIG. 10(d) shows the state in which the third area including the restored first area 1010 and the second area 1020, in which the pointer is displayed, is displayed on the display 180. The third area 1030 may be overwritten or replaced on or with the image.

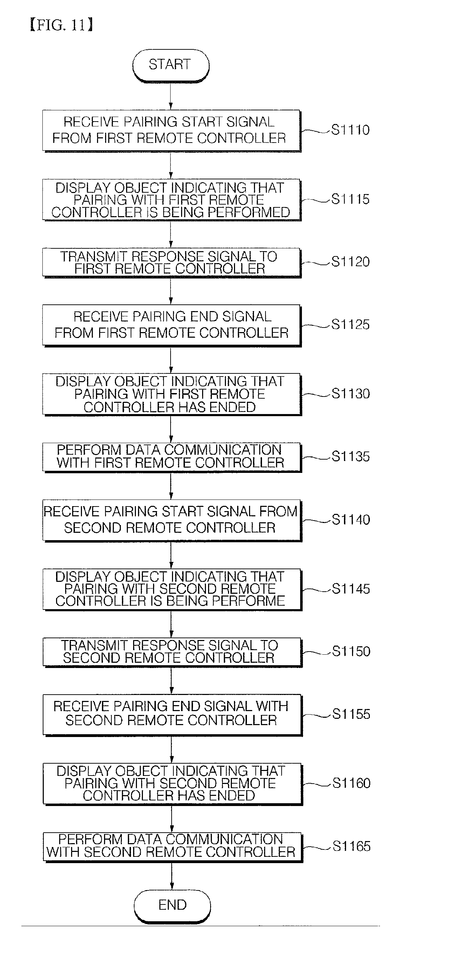

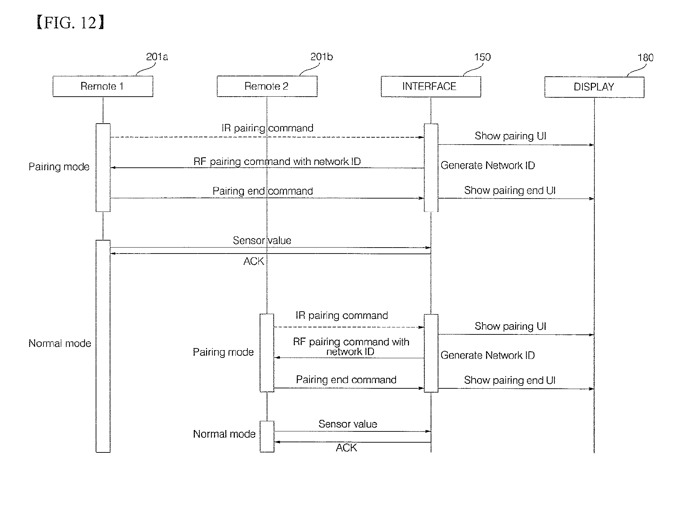

FIG. 11 is a flowchart illustrating a method for operating an image display device according to an embodiment of the present invention, and FIGS. 12 to 13 are views referred to for describing the operating method of FIG. 11.

Referring to the figures, in the method for operating the image display device of FIG. 11, a pairing method and a data communication method are performed if a plurality of pointing devices is used.

First, a pairing command is received from a first pointing device (S1110). When the image display device is powered on or when the first pointing device 201 a is newly registered, the interface 150 of the image display device receives an IR pairing command from the first pointing device 201a.

The pairing command may be an IR signal. More specifically, the first pointing device 201 a transmits an IR key code to the image display device to enter a pairing mode.

In the embodiment of the present invention, the pairing command is an IR signal and a response signal, a pairing end command or a data signal is an RF signal. Therefore, the pairing command can be easily distinguished from other signals.

Next, an object indicating that pairing with the first pointing device is being performed is displayed (S1115). The controller 170 may control display of the object indicating that pairing is being performed or indicating the pairing mode on the display 180 if the pairing command is received.

Next, a response signal is transmitted to the first pointing device (S1120). The controller 170 controls generation of an ID corresponding to the first pointing device 201 a if the pairing command is received. The generated ID and the pairing command are transmitted to the first pointing device 201 a through the interface 150. The response signal may include the generated ID and the pairing command. The response signal is an RF signal as described above.

Next, the pairing end command is received from the first pointing device (S1125). The first pointing device 201a transmits the pairing end command if the response signal including the generated ID and the pairing command is received.

The interface 150 of the image display device 100 receives the pairing end command. The pairing end command may be an RF signal as described above.

Next, an object indicating that pairing with the first pointing device has ended is displayed (S1130). The controller 170 may control display of the object indicating that pairing has ended or that the pairing mode has ended on the display 180 if the pairing end command is received.

Next, data communication with the first pointing device is performed (S1135). After the pairing mode has ended, the first pointing device 201a and the image display device 100 enter a normal mode and perform RF data communication.

For example, if a channel change signal or a volume control signal is received from the first pointing device 201 a, the image display device 100 transmits an ACK signal and performs operation according to the received signal.

Pairing with an additional pointing device will be performed as follows.

Next, a pairing command is received from a second pointing device (S1140). More specifically, in the normal mode of the first pointing device 201, that is, in a state of performing data communication with the first pointing device, if another user uses the second pointing device 201 a, in order to newly register the second pointing device 201 a, the second pointing device 201b may transmit an IR key code to the image display device to enter the pairing mode.

The interface 150 of the image display device receives an IR pairing command from the second pointing device 201b. The pairing command may be an IR signal as described above.

The first pointing device 201 a in the normal mode may temporarily stop data communication with the image display device. That is, the first pointing device may temporarily stop the normal mode and enter a sleep mode.

Next, an object indicating that pairing with the second pointing device is being performed is displayed (S1145). The controller 170 may control display of the object indicating that pairing is being performed or indicating the pairing mode on the display 180 if the pairing command is received. In particular, a pairing mode with a new pointing device may be indicated in order to be distinguished from the paired first pointing device 201 a.

Next, a response signal is transmitted to the second pointing device (S1150). The controller 170 controls generation of an ID corresponding to the second pointing device 201b if the pairing command is received. A response signal including the generated ID and the pairing command is transmitted to the second pointing device 201b through the interface 150.

Next, the pairing end command is received from the second pointing device (S1155). The second pointing device 201b transmits the pairing end command if the response signal including the generated ID and the pairing command is received. The interface 150 of the image display device 100 receives the pairing end command.

Next, an object indicating that pairing with the second pointing device has ended is displayed (S1160). The controller 170 may control display of the object indicating that pairing has ended or that the pairing mode has ended on the display 180 if the pairing end command is received.

Next, data communication with the second pointing device is performed (S1165). After the pairing mode has ended, the second pointing device 201b and the image display device 100 enter a normal mode and perform RF data communication.

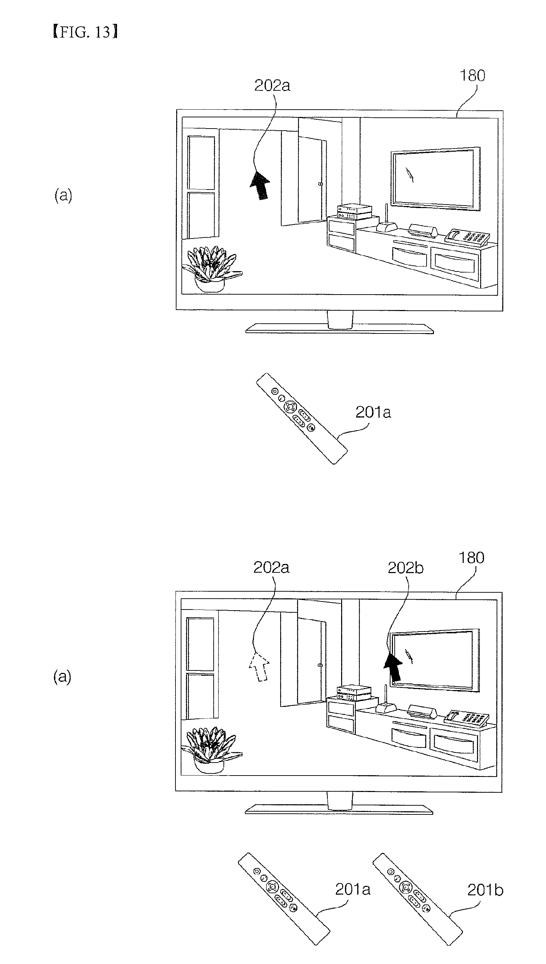

FIG. 13(a) shows the state in which a first pointer 202a according to operation of the first pointing device 201a is displayed in a predetermined area in a state in which the image is displayed on the display 180.

FIG. 13(b) shows the state in which a second pointer 202b according to operation of the second pointing device 201b is displayed on another area in a state in which the image is displayed on the display 180. In particular, the first pointer 202a displayed according to operation of the first pointing device 201a may be deleted. By temporarily stopping data communication with the first pointing device, pairing with the new pointing device may be easily performed when a plurality of pointing devices is used.

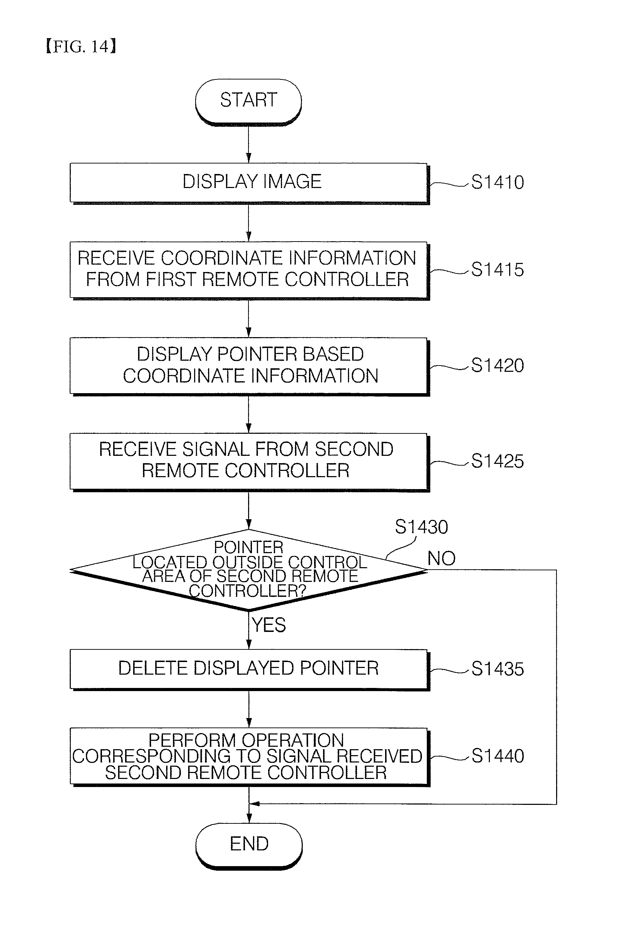

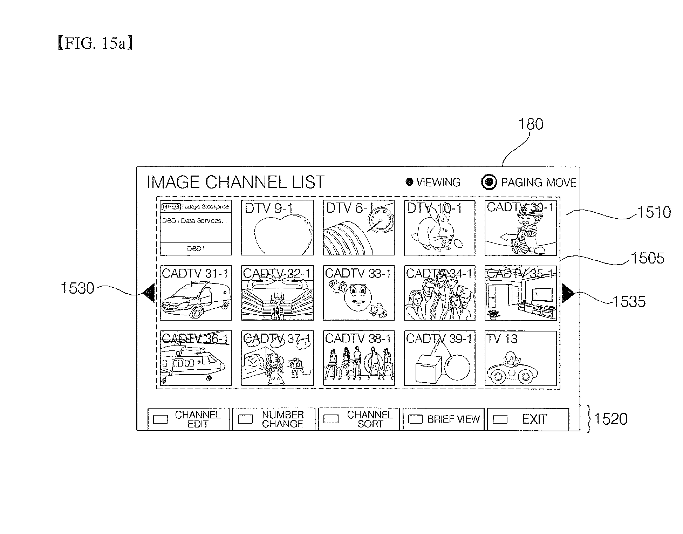

FIG. 14 is a flowchart illustrating a method for operating an image display device according to an embodiment of the present invention, and FIGS. 15a to 17c are views referred to for describing the operating method of FIG. 14.

Referring to the figures, in the method for operating the image display device of FIG. 14, the image display device operates using first and second remote controllers using different communication methods. Hereinafter, the first remote controller uses an RF communication method and the second remote controller uses an IR communication method.

First, an image is displayed (S 1410). The controller 170 controls display of a predetermined image on the display 180.

The image displayed on the display 180 may be a broadcast image received through the signal input portion 110 or an external input image. The image displayed on the display may be stored in the memory 140 or generated by the graphics processor 340 of the controller 140.

Next, coordinate information is received from the first remote controller (S 1415). The interface 150 of the image display device 100 receives pointer coordinate information from the first remote controller which is a pointing device. At this time, assume that pairing between the first remote controller and the image display device 100 has ended.

The pointer coordinate information may be, for example, x coordinate information according to a horizontal-axis movement direction and y coordinate information according to a vertical-axis movement direction. Such coordinate information may be received by the interface 150 as described above. The coordinate calculator 154 of the interface 150 may calculate the coordinates (x, y) of the pointer 202 to be displayed on the display 180 based on the received coordinate information.

Next, the pointer is displayed based on the coordinate information (S1420). The controller 170 may set a first area, in which the pointer will be displayed, of the display 180 in correspondence with the calculated coordinates (x, y). The display 180 may display the pointer generated by the graphics processor 340 in the first area.

Next, a signal is received from a second remote controller (S1425). The interface 150 of the image display device 100 receives an operation signal from the second remote controller which is an IR remote controller, while performing data communication with the first remote controller.

The controller 170 may temporarily stop data communication between the first remote controller and the image display device as described above if the operation signal is received from the second remote controller. That is, priority is given to the second remote controller.

Next, whether the pointer is located outside the control area of the second remote controller is determined (S1430). If so, the displayed pointer is deleted (S1435). The controller 170 determines whether the pointer displayed in correspondence with movement of the first remote controller of the image displayed on the display is located in the control area of the second remote controller. If so, the displayed pointer is deleted.

Next, operation corresponding to the signal received from the second remote controller is performed (S1440). The controller 170 controls various operations such as volume control and channel change according to the operation signal received from the second remote controller.

FIGS. 15a to 17c show a difference between areas accessible when the first remote controller using the RF method and the second remote controller using the IR method are used.

First, FIGS. 15a to 15e show the state in which a channel list is displayed on a full screen, that is, a full channel view screen.

The full channel view screen 1510 of FIG. 15a includes a thumbnail list 1505 including thumbnail images corresponding to broadcast images of a plurality of channels, a menu object 1520, a previous screen movement object and a next screen movement object 1535.

The thumbnail image may be generated by a channel browsing processor (not shown) and the generated thumbnail image may be included in a thumbnail list generated by the controller 140.

The menu object 1520 includes a channel edit item, a number change item, channel sort item, a brief view item and an exit item.

The full channel view screen 1510 can be controlled using the first RF remote controller but cannot be partially controlled using the second IR remote controller. In particular, only the thumbnail list area 1505 is set to the control area of the second remote controller and the other areas cannot be controlled by the second remote controller. The following constraints may be imposed.

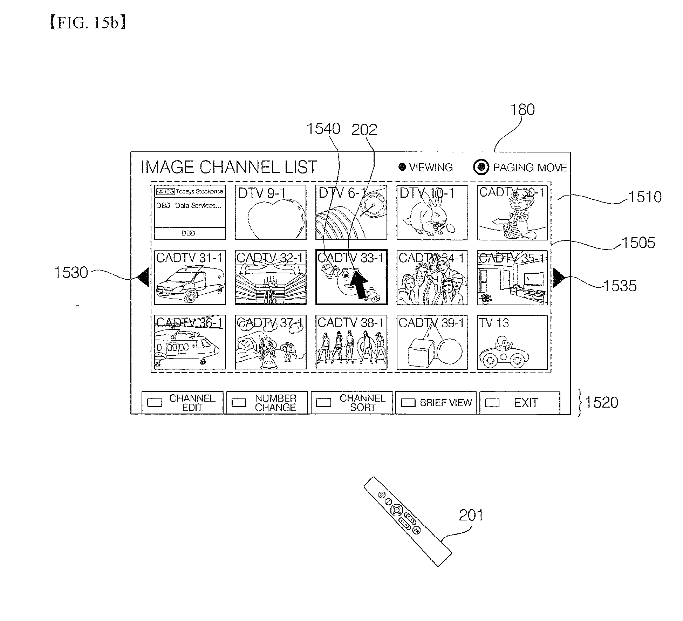

As shown in FIG. 15b, the pointer 202 may be moved to and displayed on a predetermined item 1540 of the thumbnail list 1505 in correspondence with movement of the first remote controller 201. At this time, the predetermined item 1540 on which the pointer 202 is located may be focused, that is, enlarged or highlighted.

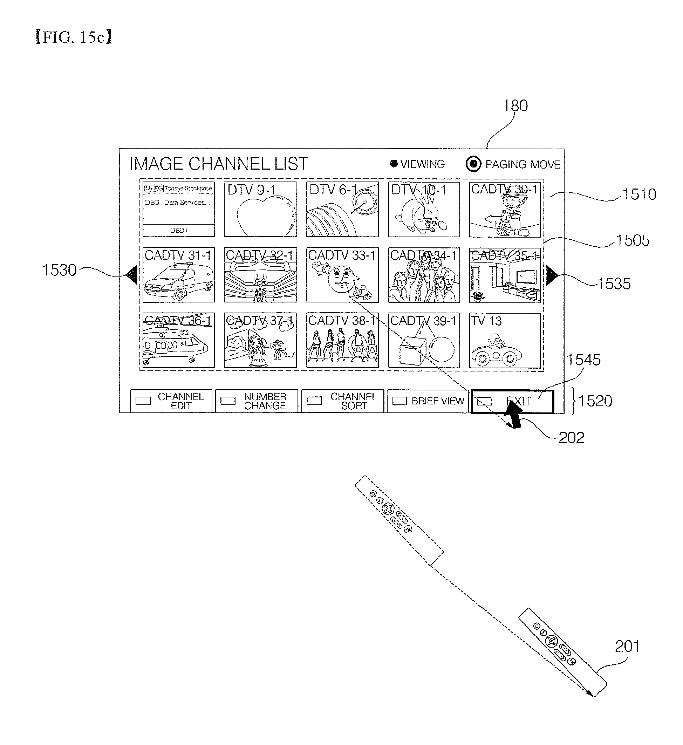

Next, as shown in FIG. 15c, the pointer 202 may be displayed on the exit item 1545 of the menu object 1520 in correspondence with movement of the first remote controller 201. The exit item 1545 may be focused, that is, enlarged or highlighted.

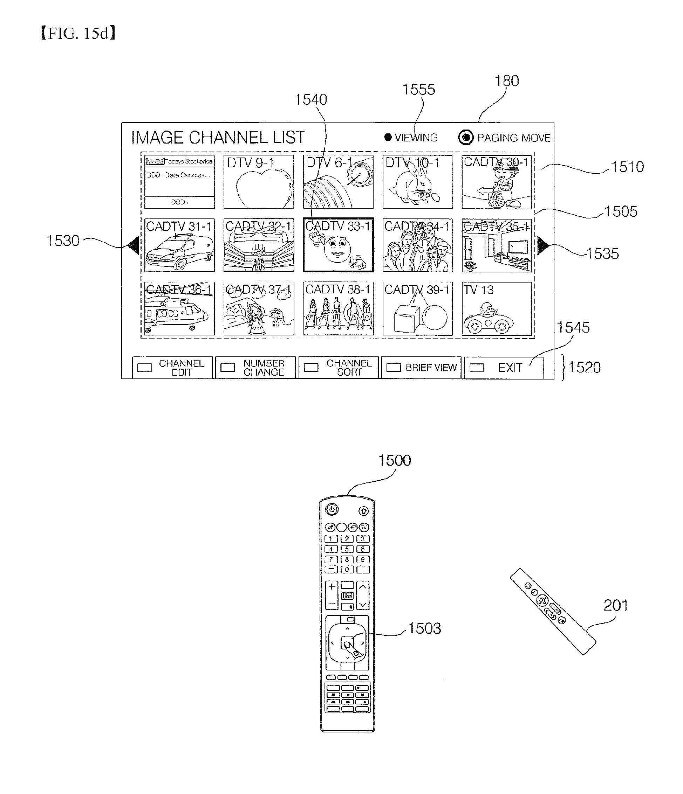

Next, as shown in FIG. 15d, if the second IR remote controller 1500 operates, the pointer 202 displayed in correspondence with movement of the first remote controller 201 is deleted. That is, the first remote controller 201 temporarily stops operation and enters a sleep mode.

Since the second remote controller 1500 operates, focusing may move to the control area of the second remote controller 1500. For example, focusing may move to a last focused area of the control area of the second remote controller. In the figure, focusing moves to a predetermined item 1540 of the thumbnail list 1505 which is the control area.

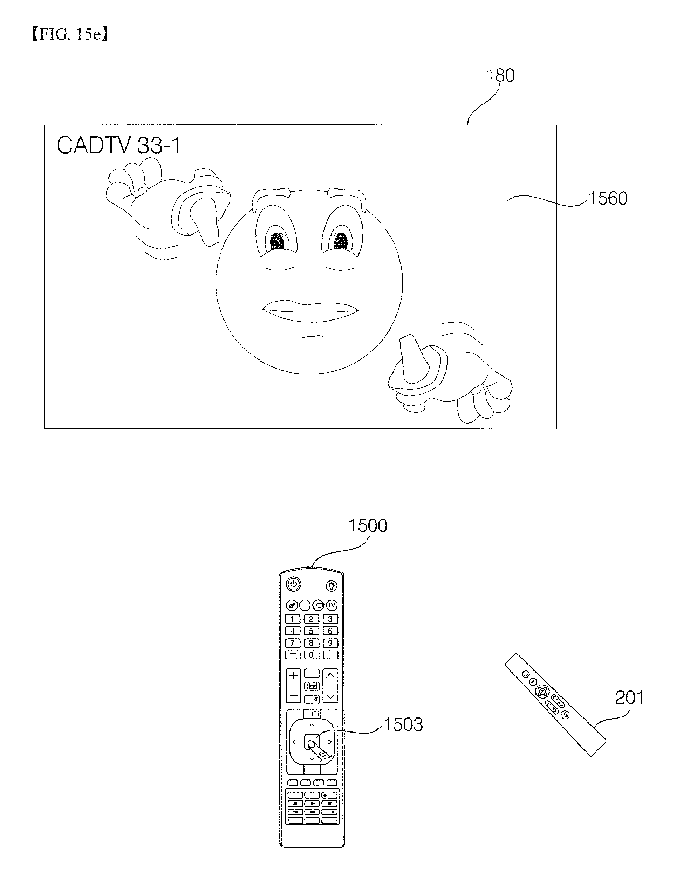

Next, as shown in FIG. 15e, if an operation signal is received from the second remote controller, for example, if an OK signal is received, the focused item 1540 is selected and the image 1560 is displayed on the full screen of the display 180.

In FIG. 15d, if a key operated by the second remote controller 1500 has a high importance degree, the key may immediately operate while the displayed pointer is deleted. For example, a power key, a volume key, a channel key, a mute key may operate.

If the key has a low importance degree, the key operates when the key is pressed twice. For example, if the OK key, the directional key or the exit key is pressed once, the displayed pointer of the first remote controller is detected as shown in FIG. 15d and, if the OK key, the directional key or the exit key is pressed twice, the OK key, the directional key or the exit key operates as shown in FIG. 15e. The key may selectively operate according to key input of the second remote controller.

The importance degree may be changed according to user settings. For example, a frequently used key may have a high importance degree such that the frequently used key operates when the key is pressed.

If operation input or key input is received from the first remote controller, the sleep mode of the first remote controller is finished and the pointer is displayed again according to the operation or operation is performed.

If remote controllers using different methods are used, and more particularly, if the pointer is displayed based on the coordinate information from the first remote controller and then the pointer is located outside the control area of the second remote controller, the displayed pointer is deleted and thus the user may use the second remote controller. Accordingly, it is possible to increase user convenience.

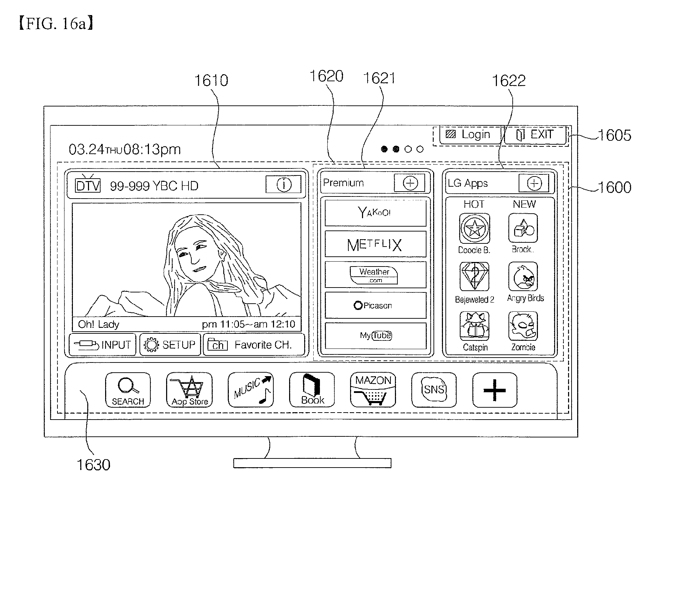

FIGS. 16a to 17c show the state in which a home screen is displayed on the display of the image display device.

The home screen may be set to an initial screen when the image display device is powered on or when the image display device is turned on in a standby mode or a basic screen when a local key (not shown) or a home key included in the pointing device 201 (e.g., a menu button) is pressed.

In order to implement the home screen, a smart system platform may be mounted in the controller 170, the memory 140 or a separate processor.

For example, the smart system platform may include a library, a framework and an application on an OS kernel or an OAS kernel. A smart system platform and a legacy system platform may be separately included. Under the smart system platform, an application may be freely downloaded, installed, executed or deleted.

The home screen of FIG. 16a is divided into a broadcast image area 1610 for displaying a broadcast image, a card object area 1620 including card objects 1621 and 1622 for displaying items from various sources (e.g., content providers (CPs) or applications) per list and an application menu area 1630 including a shortcut menu of an application item. In the figure, the application menu area 1630 is displayed on the lower side of the screen. In addition, a login item and an exit item are further displayed.

Items or objects may be fixedly displayed in the broadcast image area 1610 and the application menu area 1630.

In the card object area 1620, the card objects 1621 and 1622 may be moved or replaced and displayed. Alternatively, the items (e. g., "yakoo" item) of the card objects 1621 and 1622 may be moved or replaced and displayed.

FIG. 16a shows a first area 1600 including a broadcast image area 1610, a card object area 1620 and an application menu area 1630 as a control area of the second IR remote controller. As a non-control area, a second area 1605 including a login item and an exit item is shown.

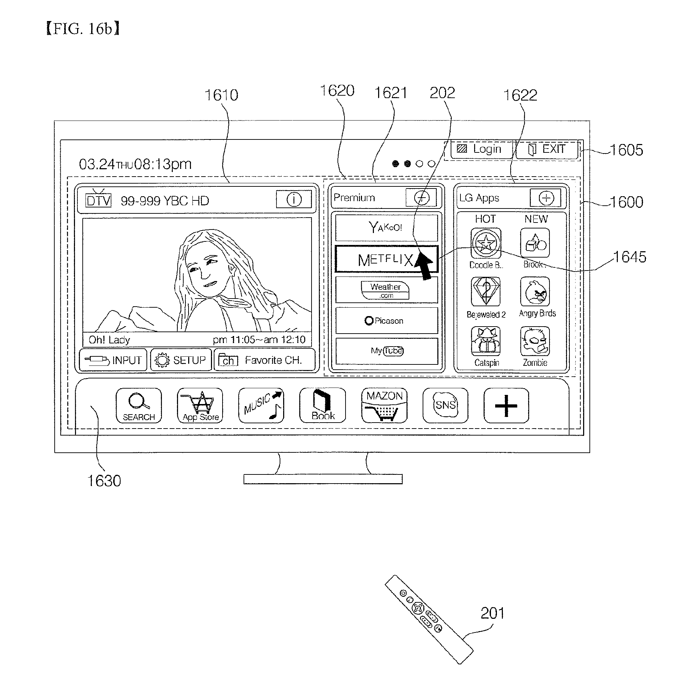

Next, as shown in FIG. 16b, the pointer 202 may be moved to and displayed on a predetermined item 1645 in the card object 1621 in correspondence with movement of the first remote controller 201. At this time, the predetermined item 1645 on which the pointer 202 is located may be focused, that is, enlarged or highlighted.

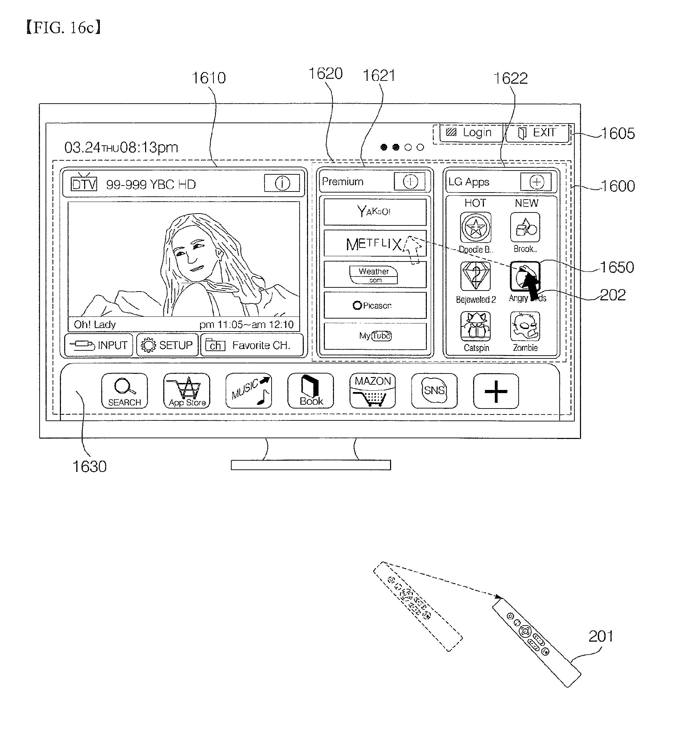

Next, as shown in FIG. 16c, the pointer 202 may be moved to and displayed on a predetermined item 1650 in the card object 1621 in correspondence with movement of the first remote controller 201. At this time, the predetermined item 1650 on which the pointer 202 is located may be focused, that is, enlarged or highlighted.

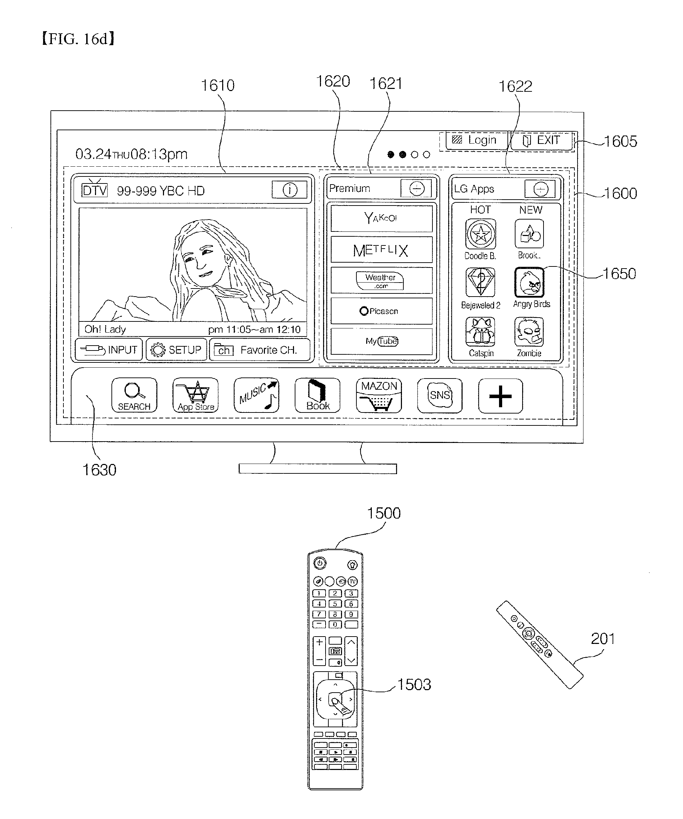

Next, as shown in FIG. 16d, if the second IR remote controller 1500 operates, the pointer 202 displayed in correspondence with movement of the first remote controller 201 is deleted. That is, the first remote controller 201 temporarily stops operation thereof and enters a sleep mode.

Since the second remote controller 1500 operates, focusing may be moved to the control area of the second remote controller 1500. In the figure, since focusing is located in the control area 1600, focusing is not changed.

Thereafter, if input for operating the OK key is received from the second remote controller 1500, the item 1650 is executed.

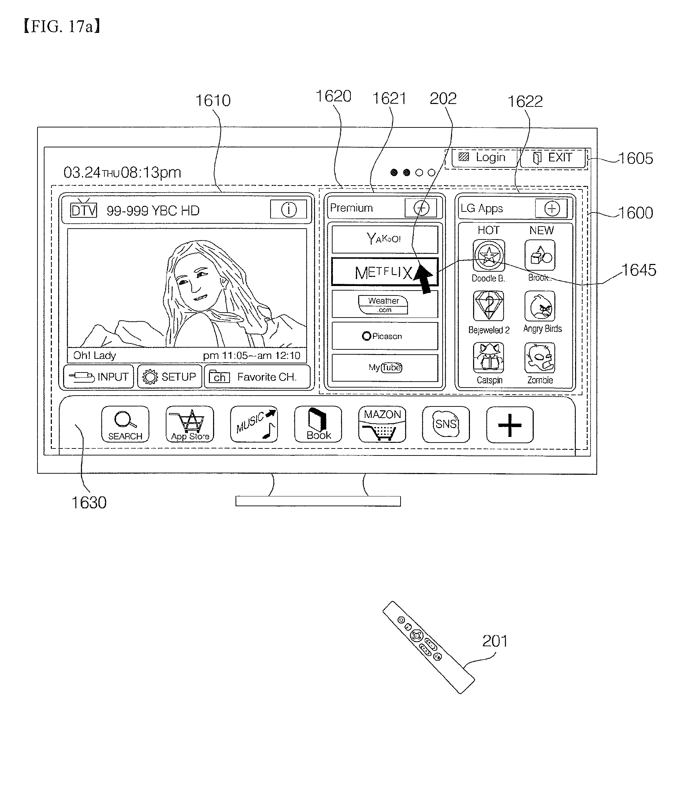

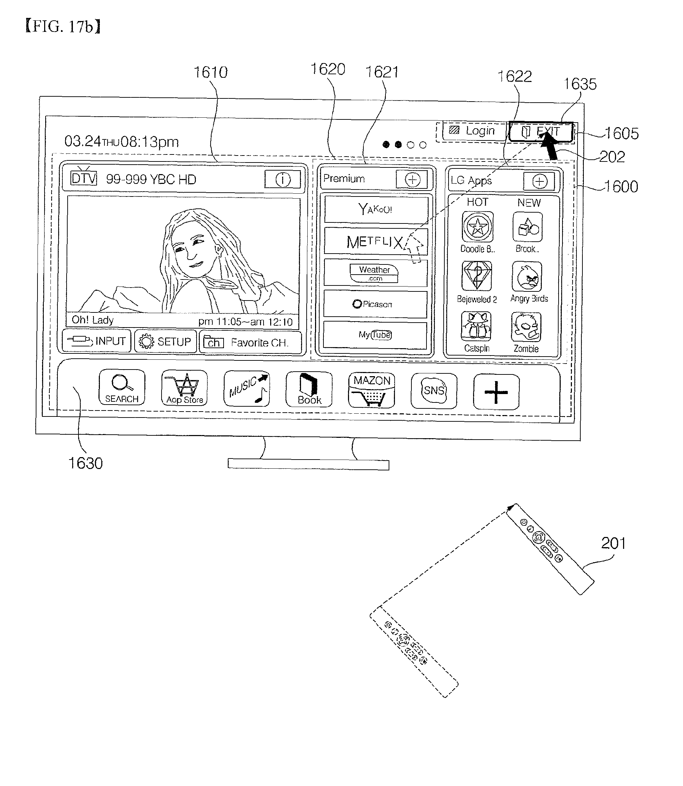

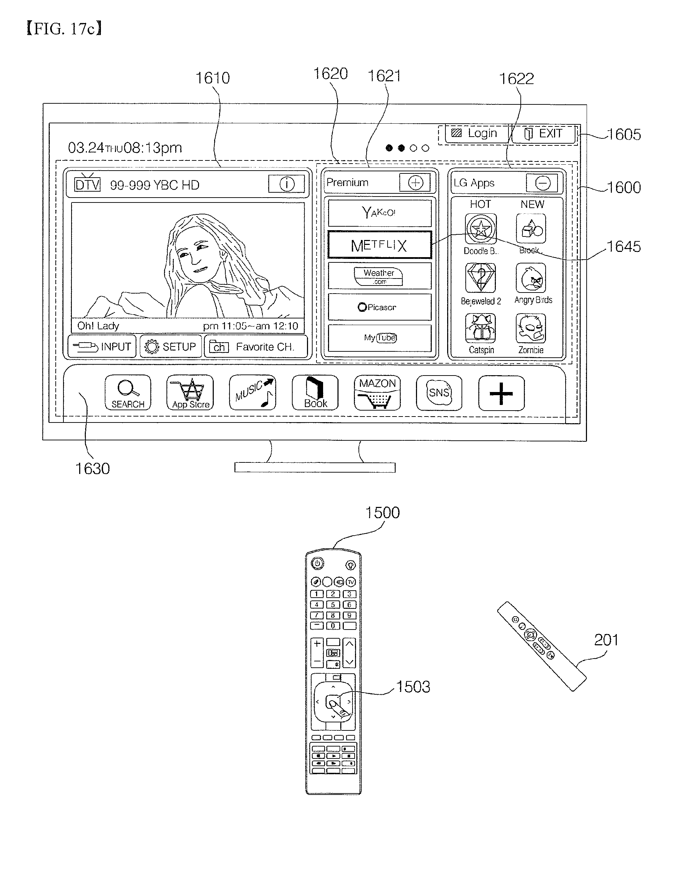

FIGS. 17a to 17c are similar to FIGS. 16a to 16e. When the second remote controller 1500 operates, since the pointer is not located on the control area 1600 of the second remote controller but is located on the exit item of the non-control area 1605 (see FIG. 17b), FIG. 17c shows the state in which the pointer 202 displayed in correspondence with movement of the first remote controller 201 is deleted and focusing is moved into the control area 1600. That is, focusing may be moved to a last focused area of the control area. In the figure, focusing is moved to a predetermined item 1645 of the card object 1621 which is the control area 1600.

Thereafter, input for operating the OK key is received from the second remote controller 1500, the item 1645 is executed.

The present invention may be implemented as code that can be written to a computer-readable recording medium and can thus be read by a processor included in an image display device. The computer-readable recording medium may be any type of recording device in which data can be stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Functional programs, code, and code segments needed for realizing the embodiments herein can be construed by one of ordinary skill in the art.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A method for operating an image display device using a pointing device, the method comprising:
displaying a pointer in a first area of a display;
receiving pointer movement coordinate information from the pointing device;
restoring the first area using a pre-stored image if a second area in which the pointer will be displayed does not overlap the first area based on the movement coordinate information;
storing an image of the second area; and
displaying the pointer in the second area.

2. The method according to claim 1, further comprising, if the first area and the second area overlap,
restoring the first area using the pre-stored image;
storing the image of the second area after restoring the first area;
displaying the pointer in the second area; and
replacing a previously displayed image with an image of a third area including the restored first area and the second area in which the pointer is displayed.

3. The method according to claim 1, further comprising, if the first area and the second area overlap,
restoring a third area including the first area and the second area using the pre-stored image of the first area in which the pointer is not displayed;
displaying the pointer in the second area included in the third area; and
replacing a previously displayed image with an image of the third area including the second area, in which the pointer is displayed, after restoring.

4. The method according to claim 1, further comprising, before the displaying the pointer in the first area,
receiving pointer coordinate information from the pointing device;
determining the first area in which the pointer will be displayed on the display based on the coordinate information; and
storing the image of the first area.

5. The method according to claim 1, wherein the pre-stored image is an image in which the pointer is not displayed.

6. A method for operating an image display device, the method comprising:
performing data communication with a first remote controller after pairing with the first remote controller has ended;
receiving a pairing signal from a second remote controller;
temporarily stopping data communication with the first remote controller; and
displaying an object indicating that pairing with the second remote controller is being performed.

7. The method according to claim 6, further comprising displaying an object that pairing has ended when pairing with the second remote controller has ended.

8. The method according to claim 6, further comprising performing data communication with the second remote controller after pairing with the second remote controller has ended.

9. A method for operating an image display device, the method comprising:
receiving coordinate information from a first remote controller;
displaying a pointer on a display based on the coordinate information;
receiving a signal from a second remote controller; and
deleting the pointer or moving focusing corresponding to the pointer or pointer location to a control area of the second remote controller if the pointer is located outside the control area of the second remote controller.

10. The method according to claim 9, further comprising temporarily stopping data communication with the first remote controller if the signal is received from the second remote controller.

11. The method according to claim 9, further comprising, if the pointer is located on a predetermined item in correspondence with movement of the first remote controller, focusing and displaying the item.

12. The method according to claim 9, further comprising deleting the pointer if the pointer is located in the control area of the second remote controller.

13. The method according to claim 9, further comprising:
if the pointer is located on a predetermined item in correspondence with movement of the first remote controller, focusing and displaying the item; and
deleting the pointer and maintaining focusing of the item if the signal is received from the second remote controller in a state in which the focused item is located in the control area of the second remote controller.

14. The method according to claim 9, further comprising, if the pointer is located on a predetermined item in correspondence with movement of the first remote controller, focusing and displaying the item,
wherein the moving focusing includes deleting the pointer and moving focusing of the item to a predetermined item of the control area of the second remote controller if the signal is received from the second remote controller in a state in which the focused item is located outside the control area of the second remote controller.

15. The method according to claim 9, further comprising displaying a home screen,
wherein the control area of the second remote controller includes a broadcast image area, a card object area and an application menu area on the home screen.
wherein a non-control area of the second remote controller includes a login item and an exit item of the home screen.

16. An image display device using a pointing device, the image display device comprising:
a display configured to display a pointer in a first area;
an interface configured to receive a pointer movement coordinate information from the pointing device;
a controller configured to restore the first area using a pre-stored image if a second area in which the pointer will be displayed does not overlap the first area based on the movement coordinate information and to control the display to display the pointer in the second area; and
a memory configured to store an image of the second area before the pointer is displayed.

17. The image display device according to claim 16, wherein if the first area and the second area overlap, the controller restores the first area using the pre-stored image, stores the image of the second area after restoring the first area, displays the pointer in the second area, and replaces a previously displayed image with an image of a third area including the restored first area and the second area in which the pointer is displayed.

18. An image display device comprising:
an interface configured to perform data communication with a first remote controller after pairing with the first remote controller has ended;
a controller configured to temporarily stop data communication with the first remote controller if a pairing signal is received from a second remote controller;
a display configured to display an object indicating that pairing with the second remote controller is being performed.

19. An image display device comprising:
an interface configured to receive coordinate information from a first remote controller;
a display configured to display a pointer based on the coordinate information; and
a controller configured to delete the pointer or to move focusing corresponding to the pointer or pointer location to a control area of a second remote controller if a signal is received from the second remote controller in a state in which the pointer is located outside a control area of the second remote controller.

20. The image display device according to claim 19, wherein, if the pointer is located on a predetermined item in correspondence with movement of the first remote controller, the controller focuses and displays the item; and
if the signal is received from the second remote controller in a state in which the focused item is located in the control area of the second remote controller, the controller deletes the pointer and maintains focusing of the item.
